# EUROPÄISCHE PATENTANMELDUNG

(11) **EP 1 396 708 A2**
(43) Veröffentlichungstag der Anmeldung: **10.03.2004**
(21) Anmeldenummer: 03015065.0
(22) Anmeldetag: 03.07.2003
(51) Int. Cl.: G01F 1/66

(54) **Sende- und Empfangsschaltung für einen Ultraschall-Durchflussmesser**

(30) Priorität: 08.08.2002 DE 10236563
(71) Anmelder: Hydrometer GmbH, 91522 Ansbach (DE)
(72) Erfinder: Sonnenberg, Hans Michael, 90616 Neuhof/Zenn (DE); Gaugler, Ulrich, 91764 Weidenbach (DE)
(74) Vertreter: Stippl, Hubert, Dipl.-Ing.

(57) **Zusammenfassung**

Sende- und Empfangsschaltung für einen Ultraschalldurchflussmesser mit mindestens zwei Wandlern, die zum Aussenden und/oder zum Empfang von Ultraschallsignalen über einer Meßstrecke angebracht sind, mindestens einem Signalgenerator zur gesteuerten Erzeugung von elektrischen Signalen, die an mindestens einen Wandler übertragen werden, einer Auswerteschaltung zur Auswertung der Meßwerte und zur Berechnung des zu ermittelnden Durchflusses sowie Schaltmittel zum Umschalten zwischen den Wandlern, wobei für jeden Wandler (6, 7) ein eigener Signalgenerator vorgesehen ist und die Schaltmittel zwischen dem jeweiligen Signalgenerator und dem zugehörigen Wandler (6 bzw. 7) angeordnet sind.

## Beschreibung

Die vorliegende Erfindung betrifft eine Sende- und Empfangsschaltung für einen Ultraschall-Durchflussmesser gemäß dem Oberbegriff des Anspruchs 1. Darüber hinaus betrifft die vorliegende Erfindung einen Ultraschalldurchflussmesser gemäß dem Oberbegriff des Anspruchs 12 unter Verwendung einer entsprechenden Sende- und Empfangsschaltung.

In der EP 0 846 936 A1 ist eine Sende- und Empfangsschaltung für einen Ultraschall-Durchflussmesser mit zwei Wandlern beschrieben, die eine sogenannte reziproke Ansteuerung der Wandler ermöglicht. Hierbei werden über je ein, dem jeweiligen Wandler zugeordnetes Schaltmittel der jeweilige Wandler abwechselnd mit ein und demselben Signalpfad verbunden. Hierbei können bauteilabhängige Einflußgrößen aufgrund der Reziprozität der Messung als Ungenauigkeitsfaktor ausgeschlossen werden. Der nicht genutzte Wandler wird bei dieser Schaltung vollständig vom Signalpfad getrennt. Der Signalgenerator ist hierbei unmittelbar mit der Auswerteschaltung verbunden und liegt unter Zwischenschaltung des jeweiligen Schaltmittels ebenfalls an dem jeweiligen Wandler an. Bei den Schaltermittel handelt es sich um analoge Schalter, die von einem Mikroprozessor gesteuert werden.

Aus der DE 100 48 959 A1 ist eine Sende- und Empfangsschaltung für Ultraschall-Durchflussmesser zur reziproken Ansteuerung bekannt, welche ebenfalls Schaltmittel aufweist, die abwechselnd jeweils einen von zwei Wandlern auf eine erste Eingangsklemme eines Operationsverstärkers aufschaltet. Der nicht genutzte Wandler wird auch hier vollständig vom Signalpfad getrennt. Auch hier ist der Signalgenerator unmittelbar mit der Auswerteschaltung verbunden. Auch hier werden analoge Schalter verwendet.

Die Aufgabe der vorliegenden Erfindung besteht darin, die Sende- und Empfangsschaltung für einen Ultraschall-Durchflusszähler gemäß dem Oberbegriff des Anspruchs 1 derart zu verbessern, daß ohne Einbußen an Meßgenauigkeit die Produktionskosten reduziert werden können.

Diese Aufgabe wird bei der Sende- und Empfangsschaltung gemäß dem Oberbegriff des Anspruchs 1 dadurch gelöst, daß für jeden Wandler ein eigener Signalgenerator vorgesehen ist und die Schaltmittel zwischen dem jeweiligen Signalgenerator und dem zugehörigen Wandler angeordnet sind. Aufgrund der Tatsache, daß die Schaltmittel zwischen dem jeweiligen Signalgenerator und dem zugehörigen Wandler sich befinden, können - im Vergleich zum eingangs erwähnten Stand der Technik - kostengünstigere Schaltmittel eingesetzt werden.

Die Wandler sind zweckmäßigerweise ohne Zwischenschaltung von Schaltmitteln, d. h. unmittelbar mit der Auswerteschaltung verbunden.

Je ein Signalgenerator und Schaltmittel sind zweckmäßigerweise als sogenannte Tristate-Gatter zusammengefasst. Diese sind vergleichsweise kostengünstig sind und können von einer Logikeinheit, z. B. einem Mikrocontroller, in einfacher Weise angesteuert werden. Zusätzlich kann ein solches Tristate-Gatter bereits in einer integrierten Schaltung oder in einen Prozessor integriert sein.

Zwischen den Wandlern und der Auswerteschaltung ist gemäß einer besonderen Ausgestaltung der vorliegenden Erfindung ein Anpassungsglied, dessen zweite Seite auf Referenzpotential liegt, vorgesehen. Das Anpassungsglied liegt an beiden Wandlern an und schafft somit für beide Wandler gleiche Referenzbedingungen. Dies ist vorteilhaft für die Signalerzeugung und vermeidet Fehler und Ungenauigkeiten.

Gemäß einer weiteren Ausgestaltung der vorliegenden Sende- und Empfangsschaltung ist das Anpassungsglied zwischen den auswerteschaltungsseitigen Ausgängen der Wandler vorgesehen. Das Anpassungsglied umfaßt zweckmäßigerweise einen Widerstand, der die beiden auswerteschaltungsseitigen Ausgänge der Wandler verbindet.

Zweckmäßigerweise sind weitere Schaltmittel, insbesondere ebenfalls in Form von sogenannten Tristate-Gattern vorgesehen, die das Anpassungsglied mit der Signalquelle verbinden. Hierdurch kann die Sende- und Empfangsschaltung über die Steuerung von der Generatorsteuereinheit sowohl im einfachen Betrieb als auch im Gegentaktbetrieb betrieben werden.

Anstelle von oder zusätzlich zu den vorerwähnten weiteren Schaltmittel kann ein Generator mit Invertierung vorgesehen sein, der das Anpassungsglied mit der Signalquelle verbindet. Durch die Invertierung erreicht man eine Verdoppelung der wirksamen Amplituden der Signale des Wandlers.

Die vorliegende Erfindung betrifft darüber hinaus einen Ultraschall-Durchflussmesser mit einem Gehäuse, einer Meßstrecke sowie einer Sende- und Empfangsschaltung. Dieser Ultraschall-Durchflussmesser ist dadurch gekennzeichnet, daß er eine Sende- und Empfangsschaltung gemäß einem der Ansprüche 1 bis 9 umfaßt.

Zweckmäßige Ausgestaltungen der vorliegenden Erfindung werden anhand der Zeichnungen näher erläutert. In den einzelnen Ausführungsbeispielen wiederkehrende Merkmale sind mit identischen Bezugsziffern gekennzeichnet. Es zeigen
- Fig. 1: eine erste Ausführungsform der erfindungsgemäßen Sende- und Empfangsschaltung.
- Fig. 2: eine weitere Ausführungsform der erfindungsgemäßen Sende- und Empfangsschaltung.
- Fig.3: eine weitere Ausführungsform der erfindungsgemäßen Sende- und Empfangsschaltung.
- Fig.4: eine weitere Ausführungsform der erfindungsgemäßen Sende- und Empfangsschaltung.

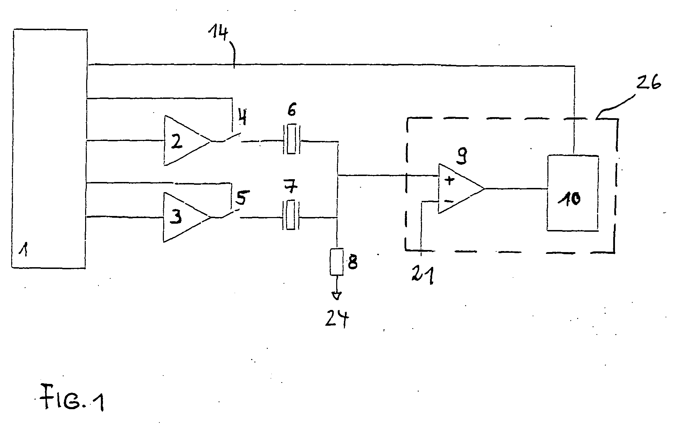

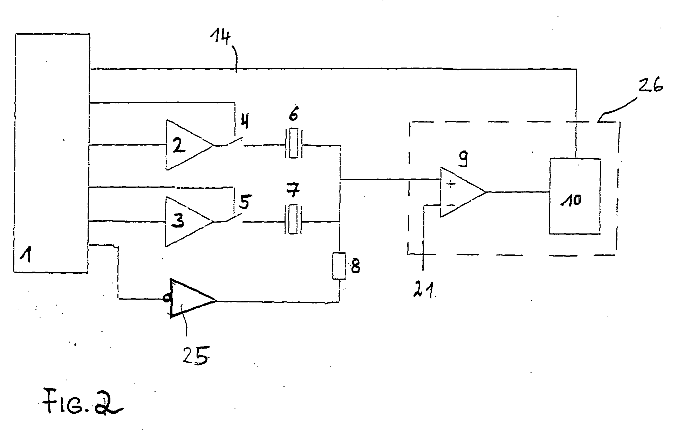

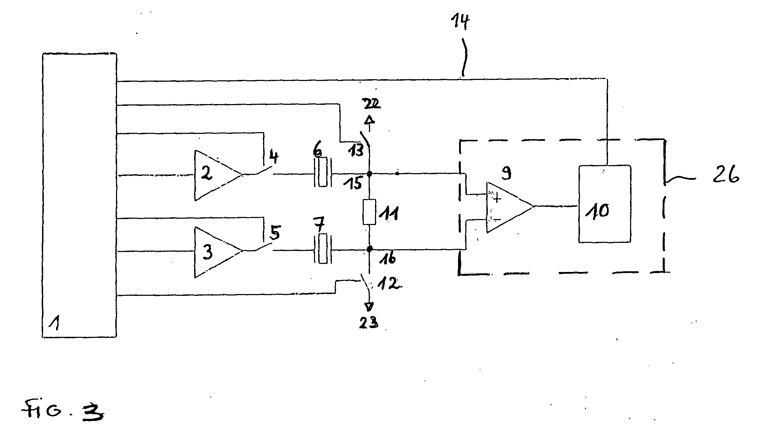

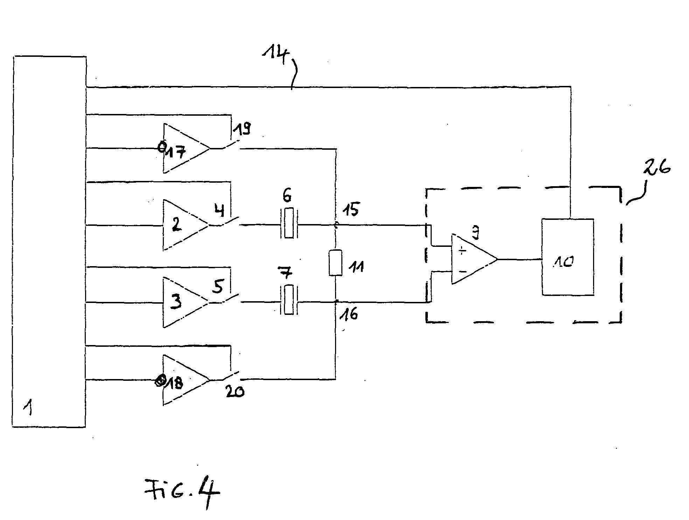

Bezugszeichen 1 in Figur 1 kennzeichnet eine Signalquelle in Form einer zentralen Steuereinheit. Die Steuereinheit 1 umfaßt eine (nicht dargestellte) Logikeinheit, z. B. einen Mikrocontroller.

An der Steuereinheit 1 befinden sich mehrere, parallele Ausgänge, die zusammen mit sog. Tristate-Gattern 4, 5 separate Signalgeneratoren bilden.Die Tristate-Gatter 4, 5 dienen als Schaltmittel und stehen mit je einem Wandler 6, 7 in Verbindung. Derartige Tristate-Gatter besitzen neben den Zuständen LOW und HIGH an deren Ausgang noch einen dritten, hochohmigen Zustand, der durch ein Steuersignal aktiviert bzw. deaktiviert werden kann.

Bei der Ausgestaltung der Sende- und Empfangsschaltung gemäß Figur 1 wird von der Steuereinheit 1 die Schaltfunktion innerhalb des jeweiligen Tristate-Gatters vorgenommen. Derartige Tristate-Gatter sind wesentlich kostengünstiger als Analogschalter, können in vorteilhafter Weise direkt von einer Logikeinheit angesteuert werden und zudem Bestandteil einer integrierten Schaltung oder eines Prozessors sein. Sie sind auch in der Lage, einzeln oder sogar in der Kombination auf einem gemeinsamen Bussystem zu arbeiten.

Jedes Tristate-Gatter 4, 5 in Figur 1 steht mit einem zugehörigen Wandler 6, 7 in Verbindung. Der betreffende Wandler 6, 7 wiederum steht unmittelbar mit der Auswerteschaltung 26 in Verbindung. Die Auswerteschaltung 26 umfaßt einen Komparator 9 zur Flankenversteilerung bzw. Digitalisierung des sinusförmigen Eingangssignals sowie eine lediglich schematisch dargestellte Zeitmeßeinheit 10.

Darüber hinaus ist ein Anpassungsglied z. B. in Form eines in der Figur 1 gezeigten Anpassungswiderstands 8 zwischen den beiden Wandlern 6, 7 und der Auswerteschaltung 26 vorgesehen. Der Anpassungswiderstand 8 liegt an einer Seite an einem Referenzpotential 24 an. Daneben ist eine direkte Verbindung (Ansteuerleitung 14) von Generatorsteuereinheit 1 und Zeitmeßeinheit 10 vorgesehen.

Nachstehend wird die Funktionsweise der Sende- und Empfangsschaltung nach Figur 1 näher erläutert.

Soll mit dem Wandler 6 gesendet werden, wird mittels der Generatorsteuereinheit 1 der Sendeburst über das Tristate-Gatter 4, d. h. dessen Gatter 2 generiert. Die Schaltfunktion ist hierbei geschlossen. Bei dem Tristate-Gatter 5 ist demgegenüber in diesem Fall die Schaltfunktion offen.

Soll mit dem Wandler 7 gesendet werden, wird der Sendeburst über das Gatter 3 des Tristate-Gatters 5 generiert. Die Schalterfunktion ist hierbei geschlossen. Diejenige des Tristate-Gatters 4 ist offen.

Soll mit dem Wandler 6 ein Ultraschallsignal empfangen werden, wird mittels der Generatorsteuereinheit 1 das Gatter 2 des Tristate-Gatters 4 auf das Potential des Punkts 24 geschalten. Hierbei ist die Schaltfunktion des Tristate-Gatters 4 geschlossen und diejenige des Tristate-Gatters offen. Die Schwingung wird hierbei über den Komparator 9 und die Zeitmeßeinheit 10 in ihrer Phasenlage bestimmt.

Soll mit dem Wandler 7 empfangen werden, wird das Gatter 3 des Tristate-Schalters 5 auf das Potential des Punkts 24 geschaltet. Die Schaltfunktion des Tristate-Gatters 5 ist geschlossen, diejenige des Tristate-Gatters 4 offen.

Durch Steuerung der Tristate-Gatter 4, 5 kann eine einfache und kostengünstig zu realisierende, reziproke Ansteuerung der Wandler sowohl für einen Sende- als auch für einen Empfangsbetrieb erfolgen.

Die Signalquelle1 steht darüber hinaus unmittelbar mit der Zeitmeßeinheit 10 über die Ansteuerleitung 14 in Verbindung. Die beiden Wandler 6, 7 stehen jeweils mit dem Pluseingang des Komparators in Verbindung und können aufgrund des Betriebs der Tristate-Gatter 4 bzw. 5 wahlweise auf den Komparator 9 aufgeschalten werden. Der Minuseingang des Komparators liegt an einem Referenzspannungspotential 21.

Die Ausgestaltung gemäß Figur 2 unterscheidet sich von der Ausgestaltung gemäß Figur 1 lediglich darin, daß der Anpassungswiderstand 8 über einen Generator 25 mit invertiertem Eingang mit der Signalquelle 1 in Verbindung steht. Durch die Invertierung am Generator 25 wird eine Verdoppelung der wirksamen Amplitude am Wandler und damit eine erhöhte Meßgenauigkeit erreicht.

Gemäß der Ausgestaltung nach Figur 3 liegt der Wandler 6 am Pluseingang des Komparators 9, der Wandler 7 am Minuseingang des Komparators 9 an. Zwischen diesen beiden Leitungsverbindungen befindet sich ein Anpassungsglied in Form eines Widerstands 11, der an jeder Seite mit einem Wandler 6 bzw. 7 verbunden. Die Wandler 6, 7 stehen darüber hinaus über je einen, jeden Wandler 6 bzw. 7 zugeordneten Schalter 13 bzw. 12 mit einem Potential 22 bzw. 23 in Verbindung. Gemäß Fig. 2 kann nach Betrieb der Sende- und Empfangsschaltung die Brückenschaltung auf das Potential 22 bzw. 23 aufgeschalten werden. Die Auswerteschaltung 26 umfaßt neben der Zeitmeßeinheit 10 einen Komparator 9 mit zwei Eingängen, wobei ein Eingang mit dem Wandler 6 sowie der weitere Eingang mit dem Wandler 7 in Verbindung steht. Hierdurch werden definierte Schaltbedingungen geschaffen und das Referenzpotenzial kann einfacher festgelegt werden.

### Zur Funktionsweise der Sende- und Empfangsschaltung nach Figur 3:

Im Falle eines Sendens mit dem Wandler 6 in Figur 2 wird der Schalter 12 geschlossen und der Schalter 13 geöffnet. Im Falle eines Sendens mit dem Wandler 7 wird der Schalter 13 geschlossen und der Schalter 12 geöffnet. Sofern mit dem Wandler 6 empfangen werden soll, wird zusätzlich der Schalter 12 geschlossen und der Schalter 13 geöffnet. Wird mit dem Wandler 7 empfangen, ist der Schalter 13 geschlossen und der Schalter 12 offen.

Gemäß der Ausgestaltung nach Figur 4 sind weitere Schaltmittel, insbesondere in Form vonweiteren Tristate-Gatter 19, 20 vorgesehen, die das Anpassungsglied in Form des Widerstands 11 mit der Signalquelle 1 verbinden.

Anstelle der Tristate-Gatter 19, 20 können auch (in Fig. 4 nicht dargestellt) insbesondere mit invertiertem Eingang versehene Generatoren der Art, wie sie in Fig. 2 mit Bezugsziffer 25 gekennzeichnet sind, verwendet werden.

Die Funktionsweise dieser Ausgestaltung der Erfindung ist folgendermaßen:

Soll mit dem Wandler 6 gesendet werden, wird mittels der Signalquelle 1 der Sendeburst über das Gatter 2 des Tristate-Gatters 4 generiert, die Schaltfunktion dieses Gatters ist hierbei geschlossen. Gleiches gilt für die Schaltfunktion des Tristate-Gatters 20. Die Schaltfunktionen des Tristate-Gatters 5 sowie 19 sind offen. Am Gatter 18 des Tristate-Gatters 20 wird das invertierte Signal von Gatter 2 angelegt.

Für ein Senden mit dem Wandler 7 wird anstatt des Gatters 2 sowie 18 das Gatter 3 sowie 17 angesteuert. Die Schaltfunktionen der Tristate-Gatter 5 sowie 19 sind geschlossen, die Schaltfunktionen der Tristate-Gatter 4 und 20 sind offen.

Im Falle eines Empfangs mit dem Wandler 6 sind die Schaltfunktionen der Tristate-Gatter 4 sowie 20 geschlossen, die diesbezüglichen Gatter 2 und 18 haben Empfangspotential. Geöffnet sind die Schaltfunktionen der Tristate-Gatter 5 und 19.

Soll mittels des Wandlers 7 empfangen werden, ist die Schalterstellung umgekehrt zu der vorbeschriebenen Schalterstellung. Die Gatter 3 und 17 sind auf Empfangspotential geschaltet.

Im Falle eines Betriebs mit Invertierung wird von der Signalquelle1 im Sendefall die Invertierung vorgenommen. Der Wandler 6 wird beginnend mit einer positiven Flanke und der Wandler 7 mit einer negativen Halbwelle angeregt.

Die vorliegende Erfindung bietet die Möglichkeit, eine Sende- und Empfangsschaltung bei sogenannter reziproker Ansteuerung unter Einsatz einfacher, kostengünstiger Mittel zu realisieren. Sie stellt daher einen ganz besonderen Beitrag auf den einschlägigen Stand der Technik dar.

## Patentansprüche

1. Sende- und Empfangsschaltung für einen Ultraschalldurchflussmesser mit
mindestens zwei Wandlern, die zum Aussenden und/oder zum Empfang von Ultraschallsignalen über einer Meßstrecke angebracht sind,
mindestens einem Signalgenerator zur gesteuerten Erzeugung von elektrischen Signalen, die an mindestens einen Wandler übertragen werden,
einer Auswerteschaltung zur Auswertung der Meßwerte und zur Berechnung des zu ermittelnden Durchflusses sowie
Schaltmittel zum Umschalten zwischen den Wandlern,
**dadurch gekennzeichnet, daß**
für jeden Wandler (6, 7) ein eigener Signalgenerator vorgesehen ist und die Schaltmittel zwischen dem jeweiligen Signalgenerator und dem zugehörigen Wandler (6 bzw. 7) angeordnet sind.

2. Sende- und Empfangsschaltung nach Anspruch 1,
**dadurch gekennzeichnet, daß**
die Wandler (6, 7) unmittelbar d.h. ohne Zwischenschaltung von Schaltmittel mit der Auswerteschaltung (26) verbunden sind.

3. Sende- und Empfangsschaltung nach Anspruch 1 oder 2,
**dadurch gekennzeichnet, daß**
je ein Signalgenerator und Schaltmittel als sog. Tristate-Gatter (4, 5) zusammengefasst ist

4. Sende- und Empfangsschaltung nach einem der vorhergehenden Ansprüche,
**dadurch gekennzeichnet, daß**
zwischen Wandler (6, 7) und Auswerteschaltung (26) ein Anpassungsglied vorgesehen ist,

5. Sende- und Empfangsschaltung nach Anspruch 4,
**dadurch gekennzeichnet, daß**
eine Seite des Anpassungsglieds auf Referenzpotential (24) liegt.

6. Sende- und Empfangsschaltung nach einem der vorhergehenden Ansprüche,
**dadurch gekennzeichnet, daß**
ein Anpassungsglied zwischen den auswerteschaltungsseitigen Ausgängen der Wandler (6, 7) vorgesehen ist.

7. Sende- und Empfangsschaltung nach einem der Ansprüche 4-8,
**dadurch gekennzeichnet, daß**
das Anpassungsglied einen Widerstand (8 bzw.11) umfasst.

8. Sende- und Empfangsschaltung nach Anspruch 7 oder 8,
**dadurch gekennzeichnet, daß**
weitere Schaltmittel, insbesondere ebenfalls in Form von Tristate-Gattern (19, 20), vorgesehen sind, die das Anpassungsglied mit der Signalquelle (1) verbinden.

9. Sende- und Empfangsschaltung nach Anspruch 7 - 9,
**dadurch gekennzeichnet, daß**
ein Generator (25) mit Invertierung vorgesehen ist, der das Anpassungsglied mit der Signalquelle (1) verbindet.

10. Ultraschalldurchflussmesser mit einem Gehäuse, einer Meßstrecke, einer Sende- und Empfangsschaltung
**dadurch gekennzeichnet, daß**
eine Sende- und Empfangsschaltung gemäß einem der Ansprüche 1-9 vorgesehen ist.
